# EUROPEAN PATENT SPECIFICATION

(11) **EP 1 968 090 B1**
(45) Date of publication and mention of the grant of the patent: **13.05.2015**
(21) Application number: 08152443.1
(22) Date of filing: 07.03.2008
(51) Int. Cl.: H01H 71/10, H02B 11/133, H01H 9/22

(54) **Circuit breaker**
Schutzschalter
Disjoncteur

(30) Priority: 08.03.2007 KR 20070023210; 14.06.2007 KR 20070009811 U
(43) Date of publication of application: 10.09.2008
(73) Proprietor: LS Industrial Systems Co., Ltd, Seoul 100-801 (KR)
(72) Inventor: Kim, Hyun Jae, Cheongju-si (KR); Kim, Myoung Soo, Cheongju-si (KR)
(74) Representative: Holmberg, Magnus

(56) References cited:
- US-A- 5 831 503
- US-A1- 2005 161 307
- US-A1- 2006 049 026

## Description

### Technical Field

The present invention relates to a circuit breaker, and more specifically, to a circuit breaker capable of miniaturizing a body by mounting an interlock device in a cradle, and capable of ensuring a user safety and protecting a line and an instrument on a power system by including a cradle drawing-in/out device capable of inserting a drawing-in/out handle of the circuit breaker in a shaft only when the circuit breaker is switched off.

### Background Art

Typically, a circuit breaker is an instrument capable of manually opening and closing a live electric circuit using an external operating device and automatically breaking an overloaded or short-circuited electric circuit. Generally, a drawing-in/out type circuit breaker is moved and positioned to three positions such as drawing-out, test, operation according to an operation state. An interlock device allowing connection to be prevented at the time of drawing-in/out operation is mounted in the circuit An example of draw-in/out type circuit breaker is disclosed in US-A-2005161307.

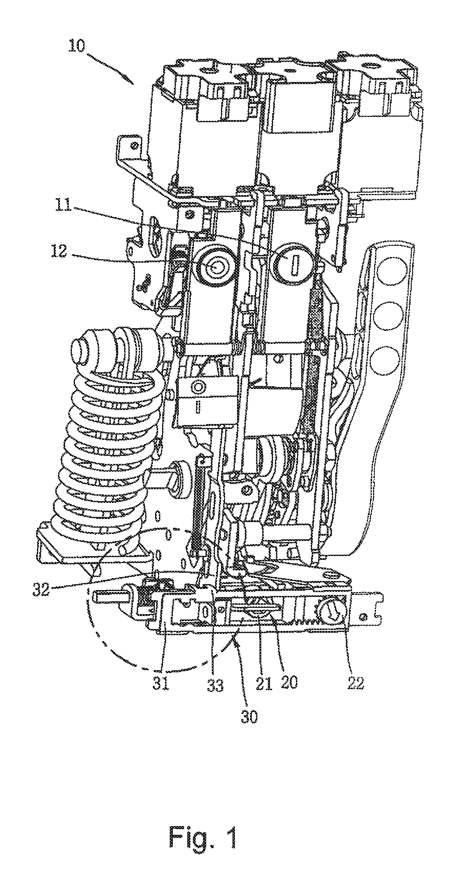

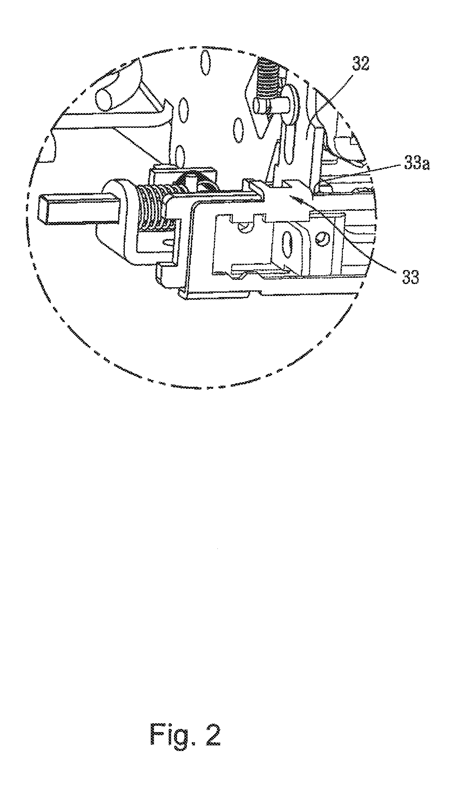

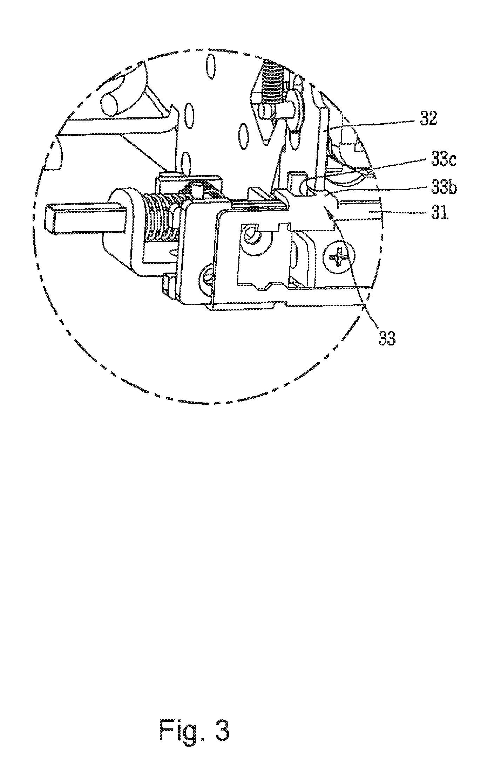

FIG. 1 is a perspective view of a circuit breaker according to the prior art, FIG. 2 is a perspective view showing an interlock device when the circuit breaker of FIG. 1 is positioned at a drawing-out position of three positions, and FIG. 3 is a perspective view showing the interlock device at the time of the drawing-in operation of the circuit breaker shown in FIG. 1.

Referring to FIG. 1, the conventional circuit breaker is constituted by a body 10, and a cradle (not shown) disposed on the lower side of the body 10.

The body is installed with an ON button 11 and an OFF button 12 for turning on and off the circuit breaker. The ON button 11 and the OFF button 12 are connected to each other so that only one of them is pressed. Also, the body 10 is installed with a drawing-in/out device 20 for moving the body 10 to a drawing-out position, a test position, and an operation position. In addition, if the ON button is pressed when drawing in/out the body, electric current is conducted so that there is a risk of a large accident and thus, the body 10 is installed with an interlock device 30 for fixing a pressed state of the OFF button.

The drawing-infout device 20 includes a drawing-in/out operation member (not shown) for drawing-in/out operation in the outside, an insertion portion 21 in which the drawing-in/out operation member is inserted, and an indicator 22 indicating a drawing-in/out state to the outside,

The interlock device 30 includes a plate 31 connected to the indicator 22 to be linearly moved according to the rotation of the indicator 22, a lever 32 moved in the up and down directions to restrict and unrestrict the OFF button 12, and an interlock portion 33 formed in a prominence and depression shape on the upper side of the plate 31 to allow the lever 32 to be interlocked and uninterlocked.

The operation of the conventional circuit breaker will be described.

Referring to FIG. 1 and 2, when the body 10 is positioned at the drawing-out position, the lever 32 is positioned at the uppermost right side 33a of the interlock portion 33 so that the lever 32 can be moved to a lower side without being interlocked to the interlock portion 33, If the lever 32 is lowered to the lower side, the OFF button 12 is unrestricted so that the circuit breaker can be connected.

Referring to FIG. 1 and 3, in an OFF state of the circuit breaker, i.e., if the lever 32 is moved upward to restrict the OFF button 12 and the drawing-in/out operation member is rotatably inserted into the insertion portion 21 to draw in the body 10 to the test position, the body 10 is drawing-in to rotate the indicator in a counterclockwise direction. The plate 31 is moved to the right by the rotation of the indicator so that a protruded portion 33b of the interlock portion 33 is positioned on the lower side of the lever 32. At this time, the lever 32 is interlocked to the protruded portion 33b of the interlock portion so that it may not move to the lower side. Therefore, it is impossible to connect the circuit breaker.

If the body 10 is positioned at the test position by continuously rotating the drawing-in/out operation member, the lever 32 is positioned at a concave portion 33c of the interlock portion 33 so that it may be lowered without being restricted to the protruded portion 33b.

That is, if the body 10 is positioned at the drawing-out position, the test position, and the operation position, the plate 31 is moved to allow the lever 32 to be interlocked to the interlock portion 33, so that lever 32 can move to the lower side. Therefore, the connection of the circuit breaker becomes possible.

Also, at the time of drawing-in/out operation of the body 10, the plate 31 is moved to allow the lever 32 to be interlocked to the interlock portion 33, so that the lever 32 may not move to the lower side, Therefore, the connection of the circuit breaker is prevented.

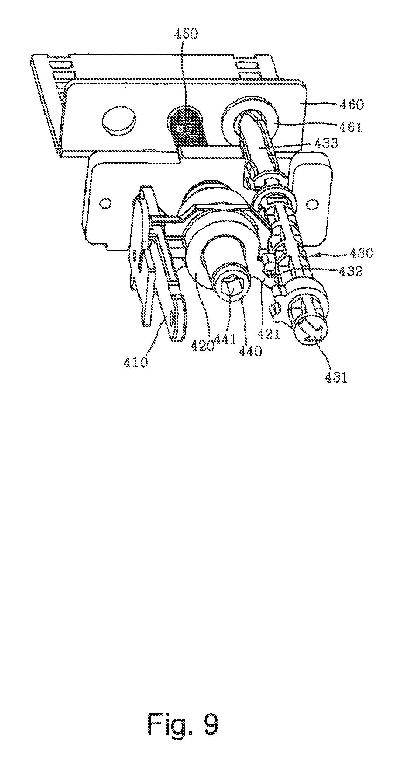

Meanwhile, FIG. 9 is a perspective view showing a structure of a cradle drawing-in/out device of the conventional circuit breaker.

As shown in FIG. 9, the cradle drawing-in/out device of the conventional circuit breaker is constituted by a plate-like operating block 410, a cylindrical coupling 420 integrally formed with the operating block 410, an indicator 430 rotatably provided in one side of the coupling 420, a lever 440 rotatably inserted in the inside of the coupling 420, a spindle 450 contacted with the end of the lever 440 to be rotatably disposed in the inside of the coupling 420, and a supporter 460 connected to one end of the spindle 450 to be moved forward and backward according to the rotation of the spindle 450, thereby rotating the indicator 430 connected to the one side thereof.

The operating block 410 is a plate-like body having a rectangular shape, and the coupling 420 is fixedly coupled to one side of the operating block 410,

The coupling 420 is formed in a cylindrical shape having a hollow. In order to be able to rotate the spindle 450 in response to the rotation of the lever 440, the lever 440 is rotatably coupled to the one side direction of the coupling 420 and the spindle 450 is rotatably coupled to the other side direction thereof.

A restricting projection 421 selectively contacting with the indicator 430 according to forward and backward movement of the coupling 420 to restrict the rotation movement of the indicator 430 is protrusively formed on the one side of the coupling 420.

The indicator 430 is formed in a cylindrical shape. A position pointer 431 capable of indicating the position of the cradle 440 by allowing the indicator 430 to rotate according to the position of the cradle 400 is provided on the end surface of the indicator 430 exposed to the outside of the circuit breaker, and a restricting rail 432 selectively and insertedly coupled to the restricting projection 421 of the coupling 420 according to the forward and backward movement of the coupling 420 is formed on the outer circumference surface of the indicator 430.

The restricting rail 432 is formed to have a predetermined length to allow the restricting projection 421 to be able to be selectively and insertedly coupled thereto according to the position of the cradle 400.

The indicator 430 on which a cam surface 433 is formed is extensively formed in the end of the indicator 430 in which restricting rail 432 is formed. The cam surface 433 is formed so that an angle formed by the cam surface 433 and a horizontal surface and the length of the cam surface 433 are different, respectively, according to the drawing-in position of the cradle 400,

That is, in the case where the cradle 400 is positioned between an assembling position and a disconnected position, an angle formed by the cam surface 433 and the horizontal surface is 0 degree, in the case where the cradle 400 is positioned between the disconnected position and a test position, an angle formed by the cam surface 433 and the horizontal surface is 45 degrees, and in the case where the cradle 400 is positioned between the test position and a connected position, an angle formed by the cam surface 433 and the horizontal surface is 45 degrees.

In order to allow the supporter 460 to be movable in the forward and backward direction in response to the rotation of the spindle 450, the center of the supporter 460 is screwed to the other end of the spindle 450, as described above, and a cam holder 461 in which the indicator 430 having cam surface 433 formed thereon is inserted so that the indicator 430 rotates in response to the forward and backward movement of the supporter 460 is provided on the one side of the supporter 460.

With such a constitution, the operation drawing the cradle 400 in the circuit breaker will be described,

First, if rotating the lever 440 in an intial state where the restricting projection 421 of the coupling 420 is separated from the restricting rail 432 of the indicator 430, the spindle 450 connected to the end of the lever 440 rotates. By means of the rotation of the spindle 450, the supporter 460 is moved to the rear so that the cam surface 433 of the indicator 430 is moved along the cam holder 461. Therefore, the cradle 400 is moved to a disconnected position so that the position pointer 431 of the indicator 430 points the disconnected position.

If continuously rotating the lever 440 in order to move the cradle 400 from the disconnected position to the test position, the supporter 460 is continuously moved to the rear so that the cam surface 433 of the indicator 430 is moved along the cam holder 461. Therefore, the indicator 430 rotates by 45 degrees so that the cradle 400 is moved to the test position, and the position pointer 431 of the indicator 430 points to the test position. If continuously rotating the lever 440 in order to move the cradle 400 from the test position to the connected position, the supporter 460 is moved to the rear so that the cam surface 433 of the indicator 430 is moved along the cam holder 461. Therefore, the indicator 430 rotates by 45 degrees so that the position pointer 431 of the indicator 430 points to the test position, and the cradle 400 is moved to the connected position so that the drawing-in of the cradle 400 is complete, Herein, the restricting projection 421 is inserted in the restricting rail 432 so that the rotation movement of the lever 440 is restricted. Accordingly, the cradle 400 does not move anymore.

### Disclosure

### Technical Problem

The circuit breaker according to the prior art as described through FIG. 1 to FIG. 3 has a problem that the interlock device is mounted in the body to make the size of the body volumious and the production process complicated.

Also, the circuit breaker according to the prior art as described through FIG. 9 has problems that since it is possible to draw-out the cradle 400 to the outside of the circuit breaker without having any constraint by inserting the drawing-in/out handle in the shaft even in the state where the switch of the circuit breaker is turned on, that is, in the state where a line and an instrument on a power system are connected, the security of users is obstructed and the line and the instrument on the power system may not be protected at all.

### Technical Solution

The present invention has been proposed to solve drawbacks of the above-mentioned prior art. It is an object of the present invention to provide a circuit breaker capable of ensuring the security of users and at the same time, protecting a line and an instrument on a power system by including a cradle drawing-in/out device enabling the insertion of a drawing-in/out handle only in the state where a switch of the circuit breaker is turned off, when intending to insert the drawing-in/out handle of the circuit breaker in a shaft.

Also, it is another object of the present invention to provide a circuit breaker capable of miniaturizing a body by mounting an interlock device preventing the connection of the circuit breaker at the time of the movement the circuit breaker from any one position of three positions such as drawing-out, test, operation, etc. to another position, in a cradle.

In order to accomplish the objects, there is provided a circuit breaker according to one embodiment of the present invention comprising: a cradle; and an interlock device mounted in the cradle to prevent the connection of the circuit breaker at the time of the drawing-in/out operation of a body, wherein the interlock device includes a button restricting portion restricting and unrestricting an OFF button; an operating block operating the button restricting portion; and an operation locking portion locking and unlocking the operating block.

The button restricting portion comprises a button restricting member interlocked and uninterlocked to one end of the OFF button to restrict and unrestrict the OFF button; and a moving member connected to the operating block to move the button restricting member in the up and down directions according to the operation of the operating block.

The operating block is installed so that one end thereof is connected to the button restricting portion and the other end thereof is exposed to the outside of the cradle in order to be operable in the outside of the cradle. The operating block is mounted with an elastic member providing resilience to expose the operating block to the outside.

The operation locking portion includes an indicator rotating in a drawing-in/out section; and an operation restricting member having one end connected to the indicator to restrict and unrestrict the operating block according to the rotation of the indicator.

The circuit breaker further comprises a connection portion connecting the button restricting portion and the operating block to move the button restricting portion in the up and down directions according to the front and rear movement of the operating block.

The connection portion includes a support portion formed in one side of the operating block; and a moving projection formed to be protruded on the lower end of the button restricting portion and contacting and moving with the support portion.

There is provided a circuit breaker according to another embodiment of the present invention comprising: a cradle; and a cradle drawing-in/out device enabling to insert a drawing-in/out handle of the circuit breaker in a shaft only in the state where a switch of the circuit breaker is turned off, wherein the cradle drawing-in/out device including a plate-like operating block; a cylindrical coupling integrally formed with the operating block; an indicator rotatably provided in one side of the coupling, a lever rotatably inserted in the inside of the coupling and having an insertion hole depressedly formed in the end thereof; a spindle contacted with the end of the lever to be rotatably disposed in the inside of the coupling; a supporter connected to one end of the spindle to be moved in the front and rear directions according to the rotation of the spindle, thereby rotating the indicator connected to the one side thereof; and a door member provided in front of the lever to allow the insertion hole to be selectively shielded from the outside.

The door member includes a door reciprocatably disposed along the diameter direction of the lever in front of the lever; and a plate provided in one side of the door to selectively restrict the reciprocation of the door along the diameter direction of the lever.

In the state where the reciprocation of the door along the diameter direction of the lever is restricted, a hole having the same diameter as the insertion hole is penetratedly formed in a plate surface of the door on which the door and the lever are overlapped.

A pin protruded at a predetermined height along the thickness direction of the plate is formed on the plate surface of the plate, and an elastic spring providing elasticity allowing the plate to be movable along a height direction is provided between the pin and a lower surface.

### Advantageous Effects

With the circuit breaker configured as described above according to one embodiment of the present invention, the interlock device restricting the OFF button at the time of drawing-in/out of the body is mounted on the cradle so that the ON button is not pressed, thereby preventing the conduction of electric current. Also, the interlock device is mounted on the cradle, rather than the body, so that the body can be miniaturized. Meanwhile, with the circuit breaker according to another embodiment of the present invention, it is possible to ensure the security of users and protect a line and an instrument on a power system by enabling to insert a drawing-in/out handle of the circuit breaker in a shaft only in the state where a switch of the circuit breaker is turned off.

### Description of Drawings

FIG. 1 is a perspective view of a circuit breaker according to the prior art;
FIG. 2 is a perspective view showing an interlock device when the circuit breaker of FIG. 1 is positioned at a drawing-out position of three positions;
FIG. 3 is a perspective view showing the interlock device at the time of the drawing-in operation of the circuit breaker shown in FIG. 1;
FIG. 4 is a perspective view showing a cradle of a circuit breaker according to one embodiment of the present invention;
FIG. 5 is a perspective view showing an interlock device when the circuit breaker shown in FIG. 4 is positioned at three positions;
FIG. 6 is a perspective view showing a support portion of the interlock device shown in FIG. 5;
FIG. 7 is a front view showing the portion at which an operation restricting member and an indicator of the interlock device shown in FIG. 5 are contacted;
FIG. 8 is a perspective view showing the interlock device at the time of the drawing-in/out operation of the circuit breaker shown in FIG. 4;
FIG. 9 is a perspective view showing a structure of a cradle drawing-in/out device of the conventional circuit breaker;
FIG. 10 is a perspective view showing a structure of a cradle drawing-in/out device of a circuit breaker according to another embodiment of the present invention; and
FIG. 11 is an operating view showing the operation of the cradle drawing-in/out device of the circuit breaker according to another embodiment of the present invention.

### DESCRIPTION FOR KEY ELEMENTS IN THE DRAWINGS

- 100:: CRADLE
- 200:: DRAWING-IN/OUT DEVICE
- 300:: INTERLOCK DEVICE
- 310:: BUTTON RESTRICTING PORTION
- 311:: BUTTON RESTRICTING MEMBER
- 312:: MOVING MEMBER
- 320:: OPERATING BLOCK
- 321:: GUIDE PORTION
- 330:: CONNECTION PORTION
- 331:: SUPPORT PORTION
- 332:: MOVING PROJECTION
- 340:: OPERATION LOCKING PORTION
- 341:: INDICATOR
- 342:: OPERATION RESTRICTING MEMBER
- 410:: OPERATING BLOCK
- 420:: COUPLING
- 430:: INDICATOR
- 440:: LEVER
- 441:: INSERTION HOLE
- 450:: SPINDLE
- 460:: SUPPORTER
- 470:: DOOR MEMBER
- 471:: DOOR
- 471a:: ONE SIDE HOLE
- 471b:: THE OTHER SIDE HOLE
- 472:: PLATE
- 472a:: PIN
- 472b:: ELASTIC SPRING

### Mode for Invention

Hereinafter, preferable embodiments of a circuit breaker according to the present invention will be described in detail, with reference to the accompanying drawings.

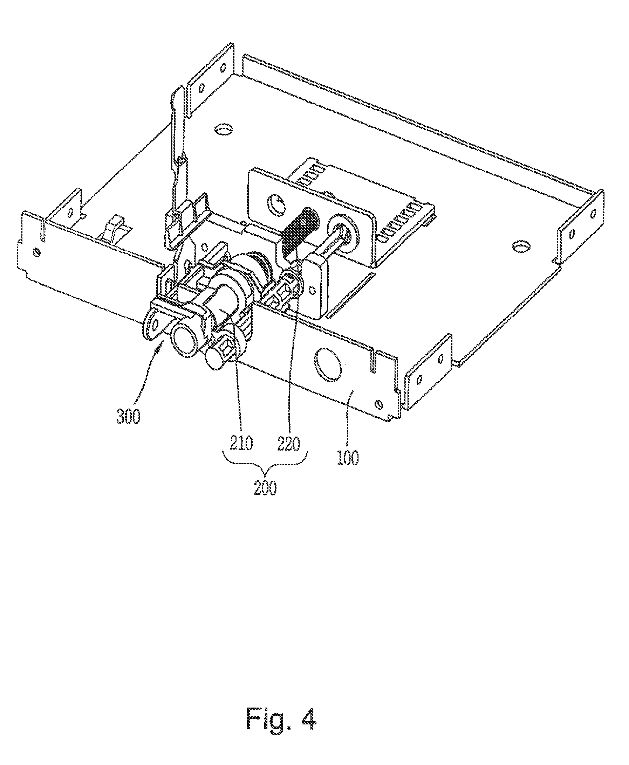

First, referring to FIG. 4 to 8, a circuit breaker according to one embodiment of the present invention will be in detail.

FIG. 4 is a perspective view showing a cradle of a circuit breaker according to one embodiment of the present invention.

Referring to FIG. 4, the circuit breaker according to one embodiment of the present invention is constituted by a cradle 100 supporting a body (not shown), a drawing-in/out device 200 mounted in the cradle 100 to draw the body in/out a drawing-in position, a test position, and an operation position, and an interlock device 300 mounted in the cradle 100 to prevent the connection of the circuit breaker at the time of the drawing-in/out movement of the body.

The body is installed with an ON button (not shown) and an OFF button (not shown) for on and off operation of the circuit breaker, and the ON button and the OFF button are connected to each other so that only one of them is pressed.

The drawing-in/out device 200 includes a drawing-in/out handle (not shown) for operating in the outside in order to draw in/out the body, a lever 210 in which the drawing-in/out handle is inserted, and a spindle connected to the lever 210 and moving the body. If inserting and rotating the drawing-in/out handle in the lever 210, the spindle 220 connected to the drawing-in/out handle within the lever 210 rotates, and the body is drawn in/out by means of the rotation of the spindle 220.

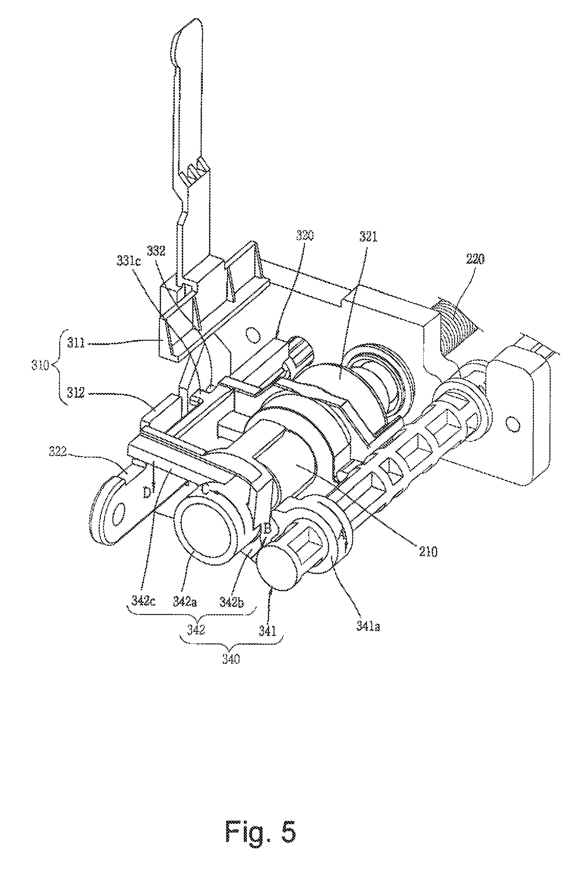

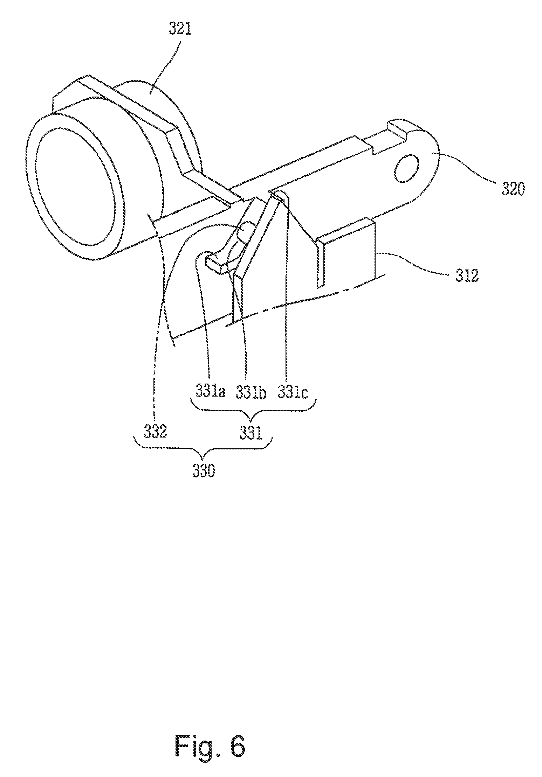

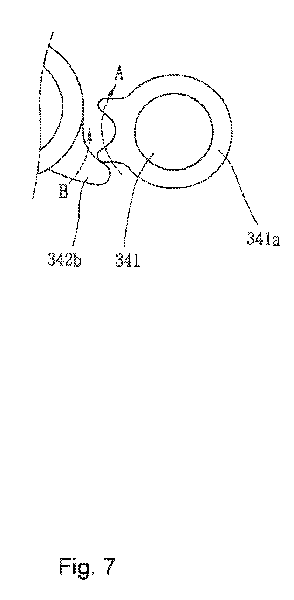

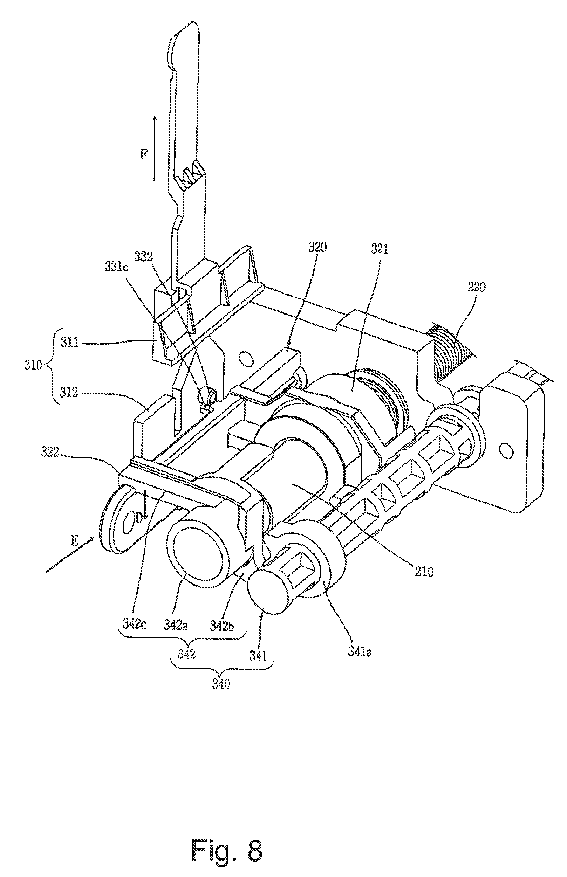

FIG. 5 is a perspective view showing an interlock device when the circuit breaker shown in FIG. 4 is positioned at three positions, FIG. 6 is a perspective view showing a support portion of the interlock device shown in FIG. 5. FIG. 7 is a front view showing the portion at which an operation restricting member and an indicator of the interlock device shown in FIG. 5 are contacted, and FIG. 8 is a perspective view showing the interlock device at the time of the drawing-in/out operation of the circuit breaker shown in FIG. 4.

Referring to FIG. 4 to FIG. 6, the interlock 300 is mounted in the cradle 100, thereby making it possible to miniaturize the body. Such an interlock device 300 is constituted by a button restricting portion 310 restricting and unrestricting the OFF button, an operating block 320 operating the button restricting portion 310, a connection portion 330 connecting the button restricting portion 310 and the operating block 320 to move the button restricting portion 310 in the up and down directions according to the front and rear movement of the operating block 320, and an operation locking portion 340 locking and unlocking the operating block 320.

The button restricting portion 310 is constituted by a button restricting member 311 interlocked and uninterlocked to one end of the OFF button to restrict and unrestrict the OFF button, and a moving member 312 connected to the operating block 320 to be moved in the up and down directions according to the operation of the operating block 320, thereby moving the button restricting member 311 in the up and down directions. The button restricting member 311 is formed in a bar shape so that one end thereof is connected to the OFF button and the other end thereof is connected to the moving member 312. The button restricting member 311 is moved in the up and down directions according to the up and down movement of the moving member 312 to restrict and unrestrict the pressed state of the OFF button. Herein, if the button restricting member 311 is moved to the upper side to restrict the OFF button in a pressed state, the ON button is not pressed. That is, if the button restricting member 311 restricts the OFF button, the connection of the circuit breaker is prevented. The moving member 312 is formed in a plate shape to be disposed to be parallel with the operating block 320, and is moved in the up and down directions by means of the operating block 320 to move the button restricting member 311 in the up and down directions.

The operating block 320 is installed so that one end thereof is connected to the moving member 312 and the other end thereof is exposed in order to be operable in the outside of the cradle 100, and has a guide portion 321 allowing one side thereof to be coupled to the lever 210. The guide portion 321 guide the operating block 320 to be straight moved by means of pressing operation in the outside. Meanwhile, an elastic member (not shown) is mounted in the inside of the operating block 320. The elastic member provides resilience returning the operating block 320 from a pressed state to an original position.

Referring to FIG. 6, the connection portion 330 is constituted by a support portion 331 formed in one side of the operating block 320, and a moving projection 332 formed in one side of the moving member 312.

The support portion 331 is formed to be protruded in an inclined plate form on an opposite side of the guide portion 321 in the operating block 320, and is constituted by a lower side supporting portion 331a and an upper side supporting portion 331c formed to support the moving projection 332, and an inclined portion 331 b formed so that the moving projection 332 is slided thereto to move the lower side supporting portion 331a and an upper side supporting portion 331c.

The moving projection 332 is formed to be protruded on the side of the moving member 312 and is supported by means of the inclined portion 331b so that it moves in the up and down directions. That is, the moving projection 332 is supported by means of the inclined portion 331 b in the lower side supporting portion 331a and is slide-moved to be moved to the upper side supporting portion 331c. Accordingly, the moving member 312 is moved from the lower side to the upper side.

Referring to FIG. 5 and 7, the operation locking portion 340 is constituted by an indicator 341 rotating in a drawing-in/out section, and an operation restricting member 342 having one end connected to the indicator 341 to restrict and unrestrict the operating block 320 according to the rotation of the indicator 341.

The indicator 341 is formed in a cylindrical form. One end of the indicator 341 has a cam profile 341 a formed thereon so that the operation restricting member 342 is contacted with the outer circumference surface thereof, and the other end thereof is connected to the drawing-in/out device 200. The indicator 341 rotates when the drawing-in/out device 200 is operated. At this time, the operation restricting member 342 contacted with the cam profile 341 a is interlocked and moved with the cam profile 341 a.

The operation restricting member 342 is formed in a pipe shape in order to be rotatable, and is constituted by a center portion 342a coupled to the lever 210, a contact portion 342b extended from the center portion 342a to be contacted with the outer circumference surface of the cam profile 341 a, and a restricting portion 342c extended from the center portion 342a to couple and decouple to a groove 322 formed in the upper surface of the operating block 320.

The operation locking portion 340 has the center of gravity positioned at the restricting portion 342c. As the pressed state of the cam profile 341 a for the contact portion 342b is released by means of the rotation of the indicator 341, the center portion 342a rotates in a clockwise direction. Therefore, the restricting portion 342c is coupled to the groove 342 of the operating block 320 to restrict the operating block 320.

Hereinafter, the operation of the circuit breaker according to the present invention will be described.

Referring to FIG. 4 and 5, when the body is positioned at three positions, the restriction of the operating block 320 by means of the operation locking portion 340 is released. At this time, the moving projection 332 is positioned on the support portion 331. More specifically, referring to FIG. 6, the moving projection 332 is positioned on the lower side supporting portion 331a of the support portion 331. Accordingly, the button restricting portion 310 on which the moving projection 332 is formed is a falling state and thus, unreleases the pressed state of the OFF button.

In order to draw in/out the body, if inserting and rotating the drawing-in/out handle through the center portion 342a into the lever 210, the spindle 220 rotates so that the body is drawn in/out. At the same time, as shown in FIG. 7, the indicator 341 rotates in an A direction. As the indicator 341 rotates in the A direction, the contact portion 342b pressed by means of the cam profile 341a is moved to a B direction. Accordingly, as shown in FIG. 5, the center portion 342c rotates in a C direction and the coupling portion 342c is moved to a D direction to be contacted with the upper surface of the operating block 320.

Referring to FIG. 8, the operating block 320 protruded to the outside is press-operated in order to the operate the interlock device. If the operating block 320 is moved to an E direction, the moving projection 332 is slidably moved along the inclined portion 331 b to be positioned on the upper side supporting portion 331c. Accordingly, the button restricting portion 310 is moved to a F direction to restrict the OFF button. At this time, the restricting portion 342c contacted with the upper surface of the operating block 320 to exert power in a D direction is coupled to the groove 322 of the operating block 320 so that the operating block 320 is fixed in a pressed state.

As described above, since the button restricting portion 310 restricts the pressed state of the OFF button at the time of the drawing-in/out operation of the body, the operation of the ON button, that is, the throwing-in of the circuit breaker is prevented.

Next, referring to FIG. 9 to 11, a circuit breaker according to another embodiment of the present invention will be described in detail.

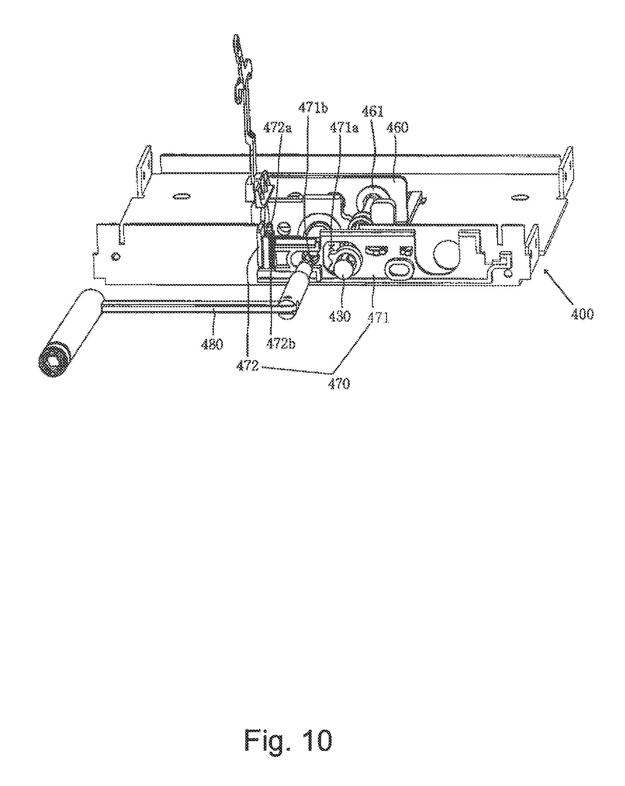

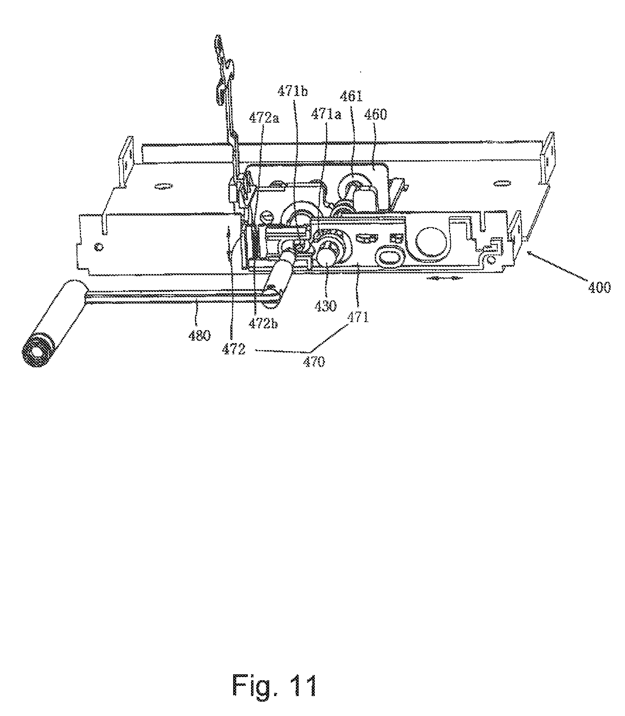

FIG. 10 is a perspective view showing a structure of a cradle drawing-in/out device of a circuit breaker according to another embodiment of the present invention, and FIG. 11 is an operating view showing the operation of the cradle drawing-in/out device of the circuit breaker according to another embodiment of the present invention.

As shown in FIG. 9 to 11, the circuit breaker according to another embodiment of the present invention includes a cradle 400 supporting a body (not shown); and a cradle drawing-in/out device, wherein the cradle drawing-in/out device is constituted by a plate-like operating block 410, a cylindrical coupling 420 integrally formed with the operating block 410, an indicator 430 rotatably provided in one side of the coupling 420, a lever 440 rotatably inserted in the inside of the coupling 420 and having an insertion hole 441 depressedly formed in the end thereof, a spindle 450 contacted with the end of the lever 440 to be rotatably disposed in the inside of the coupling 420, a supporter 460 connected to one end of the spindle 450 to be moved in the front and rear direction according to the rotation of the spindle 450, thereby rotating the indicator 430 connected to the one side thereof, and a door member 470 provided in front of the lever 440 to allow the insertion hole to be selectively shielded from the outside. The operating block 410 is a plate-like body having a rectangular shape, and the coupling 420 is fixedly coupled to one side of the operating block 410.

The coupling 420 is formed in a cylindrical shape having a hollow. In order to be able to rotate the spindle 450 by means of the rotation of the lever 440, the lever 440 is rotatably coupled to the one side direction of the coupling 420 and the spindle 450 is rotatably coupled to the other side direction thereof.

A restricting projection 421 selectively contacted with the indicator 430 according to the front and rear movement of the coupling 420 to restrict the rotation movement of the indicator 430 is formed to be protruded, on the one side of the coupling 420.

The indicator 430 is formed in a cylindrical shape. A position pointer 431 capable of indicating the position of the cradle 400 by allowing the indicator 430 to rotate according to the position of the cradle 400 is provided on the end surface of the indicator 430 exposed to the outside of the circuit breaker, and a restricting rail 432 selectively and insertedly coupled to the restricting projection 421 of the coupling 420 according to the front and rear movement of the coupling 420 is formed on the outer circumference surface of the indicator 430.

The restricting rail 432 is formed to have a predetermined length in order to allow the restricting projection 421 to be able to be selectively and insertedly coupled thereto according to the position of the cradle 400.

The indicator 430 on which a cam surface 433 is formed is extendedly formed in the end of the indicator 430 in which restricting rail 432 is formed. The cam surface 433 is formed so that an angle formed by the cam surface 433 and a horizontal surface and the length of the cam surface 433 are different, respectively, according to the drawing-in position of the cradle 400.

In the case where the cradle 400 is positioned between an assembling position and a disconnected position, an angle formed by the cam surface 433 and the horizontal surface is 0 degree, and in the case where the cradle 400 is positioned between the disconnected position and a test position, an angle formed by the cam surface 433 and the horizontal surface is 45 degrees.

Also, in the case where the cradle 400 is positioned between the test position and a connected position, an angle formed by the cam surface 433 and the horizontal surface is 45 degrees.

In order to allow the supporter 460 to be movable in the front and rear direction by means of the rotation of the spindle 450, the center of the supporter 460 is screwed to the other end of the spindle 450, as described above, and a cam holder 461 in which the indicator 430 having the cam surface 433 formed thereon is inserted so that the indicator 430 rotates according to the front and rear movement of the supporter 460 is provided on the one side of the supporter 460.

Meanwhile, the door member 470 is constituted by a door 471 reciprocatingly disposed along the diameter direction of the lever 440 in front of the lever 440, and a plate 472 provided in one side of the door 471 to selectively restrict the reciprocation of the door 471 along the diameter direction of the lever 440.

The door 471, which is a plate-like member formed in a rectangular shape, has a plurality of holes penetratively formed in the plate surface thereof. The indicator 430 is inserted through one side hole 471a of the door 471, and a handle 480 capable of rotating the lever 440 is inserted through the other side hole 471 b thereof.

The one side hole 471a formed in the plate surface of the door 471 and having the indicator 430 inserted therein is formed to have a larger diameter than the diameter of the indicator in order to allow the door 471 to be reciprocatable in the right and left directions, and the other side hole having the handle 480 inserted therein is formed to be almost same with the diameter of the handle 480 in order to be able to selectively open and dose the insertion hole 441 formed in front of the lever 440 according to the right and left reciprocation of the door 471.

A pin 472a protruded at a predetermined height along the thickness direction of the plate 472 is formed on the plate surface of the plate 472, and an elastic spring 472b providing elasticity allowing the plate 472 to be movable along a height direction is provided between the pin 472a and a lower surface.

The plate 472 is connected to an ON/OFF switch (not shown) and a link structure (not shown) of the circuit breaker to selectively reciprocate in the right and left directions according to the state where the ON/OFF button (not shown) is pressed, and is provided resilience required for return by means of the elastic string 472b.

With the above-mentioned construction, in the state where the OFF button of the circuit breaker is pressed, the plate 472 is raised by 7 mm to the upper side so that the restriction for the movement of the door 471 the left direction is released. Therefore, the door 471 moves to the left direction so that the insertion hole 441 formed in the lever 440 is exposed to the outside. A user inserts the handle 480 to the opened insertion hole 441, thereby making it possible to draw out the circuit breaker.

On the contrary, if the ON button of the circuit breaker is pressed, the plate 472 moves to the lower side by mean of the resilience of the elastic string and the door 471 moves to the right according to the movement of the plate 472 to the lower side. Therefore, the one side of door 471 and the plate 472 is maintained in a state contacted each other so that the door 471 becomes a state where it is impossible to be moved to the left. Accordingly, since the insertion hole 441 formed in the lever 440 is shielded from the outside, the user can not insert the handle. Therefore, the drawing-out of the circuit breaker becomes impossible in the state where the circuit breaker is turned on.

Although the preferred embodiment of the present invention is described in the above detailed description of the present invention, it will be apparent to those skilled in the art that various variations can be made in the present invention without departing from the scope of the present invention as defined by the claims.

## Claims

1. A circuit breaker comprising:
a body;
a cradle (100) supporting the body;
a drawing-in/out device (200) mounted in the cradle to draw the body in/out between a drawing-in position, a test position and an operation position; and
an interlock device (300) mounted in the cradle to prevent the connection of the circuit breaker at the time of the drawing-in/out operation of the body,
**characterised in that** the interlock device includes:
a button restricting portion (310) which restricts and unrestricts an OFF button;
a plate-like operating block (320) which operates the button restricting portion and installed so that one end thereof is connected to the button restricting portion and the other end thereof is exposed to the outside of the cradle in order to be operable from the outside of the cradle; and
an operation locking portion (340) which locks and unlocks the operating block, and wherein the operating block is mounted with an elastic member providing resilience to expose the operating block to the outside.

2. The circuit breaker according to claim 1, wherein the button restricting portion includes:
a button restricting member which is interlocked and uninterlocked to one end of the OFF button to restrict and unrestrict the OFF button; and
a moving member which is connected to the operating block to move the button restricting member in the up and down directions according to the operation of the operating block.

3. The circuit breaker according to claim 1, wherein the operation locking portion includes:
an indicator which rotates in a drawing-in/out section; and
an operation restricting member which has one end connected to the indicator to restrict and unrestrict the operating block according to the rotation of the indicator.

4. The circuit breaker according to claim 1, further comprising a connection portion which connects the button restricting portion and the operating block to move the button restricting portion in the up and down directions according to the front and rear movement of the operating block.

5. The circuit breaker according to claim 4, wherein the connection portion includes:
a support portion which is formed in one side of the operating block; and
a moving projection which is formed to be protruded on the lower end of the button restricting portion and contacting and moving with the support portion.

6. The circuit breaker according to claim 1:
wherein the drawing-in/out device includes:
a cylindrical coupling which is integrally formed with the operating block;
an indicator which is rotatably provided in one side of the coupling;
a lever which is rotatably inserted in the inside of the coupling and has an insertion hole depressedly formed in the end thereof;
a spindle which is contacted with the end of the lever to be rotatably disposed in the inside of the coupling;
a supporter which is connected to one end of the spindle to be moved in the front and rear direction according to the rotation of the spindle, thereby rotates the indicator connected to the one side thereof; and
a door member which is provided in front of the lever to allow the insertion hole to be selectively shielded from the outside.

7. The circuit breaker according to claim 6, wherein the door member includes:
a door reciprocatably which is disposed along the diameter direction of the lever in front of the lever; and
a plate which is provided in one side of the door to selectively restrict the reciprocation of the door along the diameter direction of the lever.

8. The circuit breaker according to claim 7, wherein in the state where the reciprocation of the door along the diameter direction of the lever is restricted, a hole having the same diameter as the insertion hole is penetratedly formed in a plate surface of the door on which the door and the lever are overlapped.

9. The circuit breaker according to claim 7, wherein a pin protruded at a predetermined height along the thickness direction of the plate is formed on the plate surface of the plate, and an elastic spring providing elasticity allowing the plate to be movable along a height direction is provided between the pin and a lower surface.

## Patentansprüche

1. Stromunterbrecher, der Folgendes umfasst:
einen Körper;
eine Wiege (100), die den Körper trägt;
eine Einzieh-/Ausziehvorrichtung (200), die in der Wiege befestigt ist, um den Körper zwischen einer Einziehposition, einer Prüfposition und einer Betätigungsposition ein-/auszuziehen; und
eine Verriegelungsvorrichtung (300), die in der Wiege befestigt ist, um die Verbindung des Stromunterbrechers zu der Zeit der Einzieh-/Ausziehbetätigung des Körpers zu verhindern,
**dadurch gekennzeichnet, dass** die Verriegelungsvorrichtung Folgendes enthält:
einen Knopfeinschränkungsabschnitt (310), der den AUS-Knopf einschränkt und freigibt;
einen plattenähnlichen Betätigungsblock (320), der den Knopfeinschränkungsabschnitt betreibt und so eingebaut ist, dass eines seiner Enden mit dem Knopfeinschränkungsabschnitt verbunden ist und das andere seiner Enden zu der Außenseite der Wiege freiliegt, um von außerhalb der Wiege betätigbar zu sein; und
einen Betätigungsverriegelungsabschnitt (340), der den Betätigungsblock verriegelt und entriegelt und wobei der Betätigungsblock mit einem elastischen Element befestigt ist, das eine Elastizität liefert, um den Betätigungsblock nach außen freizulegen.

2. Stromunterbrecher nach Anspruch 1, wobei der Knopfeinschränkungsabschnitt Folgendes umfasst:
ein Knopfeinschränkungselement, das mit einem Ende des AUS-Knopfes verriegelt und entriegelt wird, um den AUS-Knopf einzuschränken und freizugeben; und
ein sich bewegendes Element, das mit dem Betätigungsblock verbunden ist, um das Knopfeinschränkungselement in der Aufwärts-/Abwärtsrichtung gemäß der Betätigung des Betätigungsblocks zu bewegen.

3. Stromunterbrecher nach Anspruch 1, wobei der Betätigungsverriegelungsabschnitt Folgendes umfasst:
einen Indikator, der sich in einem Einzieh-/Ausziehabschnitt dreht; und
ein Betätigungseinschränkungselement, wovon ein Ende mit dem Indikator verbunden ist, um den Betätigungsblock gemäß der Drehung des Indikators einzuschränken und freizugeben.

4. Stromunterbrecher nach Anspruch 1, der ferner einen Verbindungsabschnitt umfasst, der den Knopfeinschränkungsabschnitt und den Betätigungsblock verbindet, um den Knopfeinschränkungsabschnitt in die Aufwärts-/Abwärtsrichtung gemäß der Vor- und Zurückbewegung des Betätigungsblocks zu bewegen.

5. Stromunterbrecher nach Anspruch 4, wobei der Verbindungsabschnitt Folgendes enthält:
einen Tragabschnitt, der in einer Seite des Betätigungsblocks gebildet ist; und
einen sich bewegenden Vorsprung, der gebildet ist, um an dem unteren Ende des Knopfeinschränkungsabschnitt vorzustehen und der den Tragabschnitt berührt und sich mit ihm bewegt.

6. Stromunterbrecher nach Anspruch 1:
wobei die Einzieh-/Ausziehvorrichtung Folgendes umfasst:
eine zylindrische Kopplung, die einteilig mit dem Betätigungsblock gebildet ist;
einen Indikator, der drehbar in einer Seite der Kopplung vorgesehen ist;
einen Hebel, der drehbar in das Innere der Kopplung eingefügt ist und ein Einführloch besitzt, das in seinem Ende vertieft gebildet ist;
eine Spindel, die mit dem Ende des Hebels berührt wird, um drehbar innerhalb der Kopplung angeordnet zu sein;
ein Trageelement, das mit einem Ende der Spindel verbunden ist, um gemäß der Drehung der Spindel in der Vorwärts-/Rückwärtsrichtung bewegt zu werden, wodurch sie den Indikator, der mit einer seiner Seiten verbunden ist, dreht; und
ein Türelement, das vor dem Hebel vorgesehen ist, um zu erlauben, dass das Einführloch wahlweise von außen abgeschirmt ist.

7. Stromunterbrecher nach Anspruch 6, wobei das Türelement Folgendes enthält:
eine Tür, die hin und her beweglich ist und entlang einer Richtung des Durchmessers des Hebels vor dem Hebel angeordnet ist; und
eine Platte, die in einer Seite der Tür vorgesehen ist, um die Hin- und Herbewegung der Tür entlang der Richtung des Durchmessers des Hebels einzuschränken.

8. Stromunterbrecher nach Anspruch 7, wobei in dem Zustand, in dem die Hin- und Herbewegung der Tür entlang der Richtung des Durchmessers des Hebels eingeschränkt ist, ein Loch, das denselben Durchmesser wie das Einführloch besitzt, eindringend in jener Plattenfläche der Tür gebildet ist, auf der sich die Tür und der Hebel überdecken.

9. Stromunterbrecher nach Anspruch 7, wobei ein Stift, der in einer vorgegebenen Höhe entlang der Richtung der Dicke der Platte vorsteht, auf der Plattenfläche der Platte gebildet ist und eine elastische Feder, die Elastizität bereitstellt, die erlaubt, dass die Platte entlang einer Höhenrichtung beweglich ist, zwischen dem Stift und einer unteren Fläche vorgesehen ist.

## Revendications

1. Disjoncteur comprenant :
un corps ;
un châssis (100) supportant le corps ;
un dispositif de traction vers l'intérieur/vers l'extérieur (200) monté dans le châssis pour tirer le corps vers l'intérieur/vers l'extérieur entre une position de traction vers l'intérieur, une position d'essai et une position d'actionnement ; et
un dispositif de verrouillage (300) monté dans le châssis pour empêcher la connexion du disjoncteur au moment de l'opération de traction du corps vers l'intérieur/vers l'extérieur, **caractérisé en ce que** ce dispositif de verrouillage comprend :
une partie de restriction de bouton (310) qui restreint et libère un bouton HORS CIRCUIT ;
un bloc d'actionnement en forme de plaque (320) qui actionne la partie de restriction du bouton et qui est installé de manière à ce qu'une extrémité de celui-ci soit raccordée à la partie de restriction du bouton et à ce que l'autre extrémité de celui-ci soit exposée à l'extérieur du châssis afin de pouvoir être actionnée depuis l'extérieur du châssis ; et
une partie de blocage d'actionnement (340) qui bloque et débloque le bloc d'actionnement,
et dans lequel le bloc d'actionnement est monté avec un élément élastique fournissant une élasticité pour exposer le bloc d'actionnement à l'extérieur.

2. Disjoncteur selon la revendication 1, dans lequel la partie de restriction du bouton comprend :
un élément de restriction de bouton qui est verrouillé et déverrouillé à une extrémité du bouton HORS CIRCUIT pour restreindre et libérer le bouton HORS CIRCUIT ; et
un élément mobile qui est raccordé au bloc d'actionnement pour bouger l'élément de restriction du bouton dans les directions vers le haut et vers le bas selon l'actionnement du bloc d'actionnement.

3. Disjoncteur selon la revendication 1, dans lequel la partie de blocage d'actionnement comprend :
un indicateur qui tourne dans une section de traction vers l'intérieur/vers l'extérieur ; et
un élément de restriction d'actionnement qui a une extrémité raccordée à l'indicateur de façon à restreindre et à libérer le bloc d'actionnement selon la rotation de l'indicateur.

4. Disjoncteur selon la revendication 1, comprenant en outre une partie de raccordement qui raccorde la partie de restriction du bouton et le bloc d'actionnement pour bouger la partie de restriction du bouton dans les directions vers le haut et vers le bas selon le mouvement avant et arrière du bloc d'actionnement.

5. Disjoncteur selon la revendication 4, dans lequel la partie de raccordement comprend :
une partie de support qui est formée dans un côté du bloc d'actionnement ; et
une saillie mobile qui est formée de façon à faire saillie sur l'extrémité inférieure de la partie de restriction du bouton et qui est en contact et bouge avec la partie de support.

6. Disjoncteur selon la revendication 1 :
dans lequel le dispositif de traction vers l'intérieur/vers l'extérieur comprend :
un accouplement cylindrique qui est formé solidairement avec le bloc d'actionnement ;
un indicateur qui est prévu de manière rotative sur un côté de l'accouplement ;
un levier qui est inséré de manière rotative dans l'intérieur de l'accouplement et qui a un trou d'insertion formé par enfoncement dans l'extrémité de celui-ci ;
un axe qui est en contact avec l'extrémité du levier pour être disposé de manière rotative dans l'intérieur de l'accouplement ;
un support qui est raccordé à une extrémité de l'axe pour être bougé dans la direction avant et arrière selon la rotation de l'axe, tournant ainsi l'indicateur raccordé au un côté de celui-ci ; et
un élément porte qui est prévu en avant du levier pour permettre au trou d'insertion d'être blindé sélectivement de l'extérieur.

7. Disjoncteur selon la revendication 6, dans lequel l'élément porte comprend :
une porte à mouvement de va-et-vient qui est disposée le long de la direction de diamètre du levier en avant du levier ; et
une plaque qui est prévue sur un côté de la porte pour restreindre sélectivement le mouvement de va-et-vient de la porte le long de la direction de diamètre du levier.

8. Disjoncteur selon la revendication 7, dans lequel, dans l'état où le mouvement de va-et-vient de la porte le long de la direction de diamètre du levier est restreint, un trou ayant le même diamètre que le trou d'insertion est formé par pénétration dans une surface de plaque de la porte sur laquelle la porte et le levier se chevauchent.

9. Disjoncteur selon la revendication 7, dans lequel une broche faisant saillie à une hauteur prédéterminée le long de la direction d'épaisseur de la plaque est formée sur la surface de plaque de la plaque, et un ressort élastique fournissant une élasticité permettant à la plaque d'être mobile le long d'une direction de hauteur est prévu entre la broche et une surface inférieure.
